# EUROPEAN PATENT APPLICATION

(11) **EP 1 623 930 A1**
(43) Date of publication of application: **08.02.2006**
(21) Application number: 05105530.9
(22) Date of filing: 22.06.2005
(51) Int. Cl.: B65D 41/04, B65B 7/28, B65D 51/20, B65D 77/20, B29C 65/02

(54) **A method for evaluating the seal of a container.**

(30) Priority: 04.08.2004 IT PR20040056
(71) Applicant: PROCOMAC S.p.A., 43038 Sala Baganza (Parma) (IT)
(72) Inventor: LE BRUN, Renato, 43100, PARMA (IT)
(74) Representative: Gotra, Stefano

(57) **Abstract**

A method for evaluating the seal of a container (2) whereto is sealed a foil contained in a cap associated to the container, comprising the determination of a temperature distribution of the foil at the end of the seal process by heat-sensitive optical means (3) and a subsequent analysis of said temperature distribution compared to a reference distribution, said method comprising an additional step of diagnosing the cause of the seal defect.

## Description

The present invention relates to a method for evaluating the seal of a container.

In the bottling industry, high speed rotary plants are used to screw capsules onto the neck of containers. With regard to containers made of plastic material, e.g. of polyethylene (PE), the application of the caps is often associated to a sealing process. Said sealing process can take place by means of caps that are so shaped as to allow the so-called lip seal. Another sealing technique consists of sealing a film on the mouth of the container. Said film, generally but not necessarily constituted by an aluminium disk, is called foil. With regard to the application of the foil, in some cases the foil is thermally sealed to the mouth of the container and, in a subsequent step, the cap is applied. In other cases, the foil is associated to the cap, setting it in the bottom of the cap itself, then applying the cap, screwing it on the container, similarly to the case of the lip seal. Subsequently, the containers thus capped are moved to a space, called induction tunnel, where an electromagnetic field is present, which causes the heating of the foils and their consequent sealing to the mouth of the containers. Using the technique whereby the foil is associated to the cap, there is a mean rate of sealing defects of about one container out of 20,000, similarly to the case of lip sealing. Otherwise, using the technique that provides for a preliminary sealing, the rate of defective seals rises to about one container out of 2000. Therefore, the technical solution in which the foil is associated to the cap is definitely advantageous, in terms of efficiency.

Within the scope of the sealing process, inspection techniques are also used to verify the seal of every container. Said inspection step should enable to discard containers characterised by a defective seal. In this light, a known inspection technique exploits a "leak tester", i.e. a device that compresses the containers to check for any leaks of liquid. The leak tester technique is effective if the foils are sealed to the containers preventively, since the containers are inspected before the caps are applied. Conversely, when the foil is applied together with the cap, the leak tester technique is not effective, because the presence of the cap prevents liquid from leaking, regardless of the quality of the seal. Therefore, in the case of simultaneous application of cap and foil, the commonly used inspection technique provides for a line inspector, of the type also used in the case of lip sealing, which is essentially constituted by a TV camera, that allows to verify the application of the cap. Moreover, use of an inductive sensor, able to verify the presence of the foil, is known.

However, in the case of the simultaneous application of cap and foil, known inspection techniques do not allow to detect some types of seal defects, which are an actual risk. These types of seal defects comprise, in particular, the three following situations:
- when the container passes through the induction tunnel, the foil does not undergo sufficient heating to be sealed;
- during the heating operation, the foil is accidentally bent, so it is sealed only partially;
- during the heating operation, the foil is in a wrong position, i.e. is not centred relative to the mouth of the container, so it is not sealed.

Therefore, the prior art has considerable limitations, since it does not provide a method for effectively inspecting a container that was sealed by applying a foil associated to a cap and subsequently heat sealed.

The object of the present invention is to eliminate the aforesaid drawbacks and to make available a method for evaluating the seal of a container closed with a foil applied with heat on the mouth of the container and then with a cap which contains the foil.

Said object is fully achieved by the method of the present invention, which is characterised by the contents of the claims set out below and in particular in that it comprises the following steps:
- determining a temperature distribution of the foil, at the end of the application of the foil on the container;
- analysing of said temperature distribution.

This and other characteristics shall become more readily apparent from the following description of a preferred embodiment, illustrated purely by way of non limiting example in the accompanying drawing tables, in which:
- Figure 1 shows a diagram that summarises the method of the present invention;
- Figure 2 shows a temperature distribution of a properly sealed foil;
- Figure 3 shows a temperature distribution of a foil that was sealed only partially.

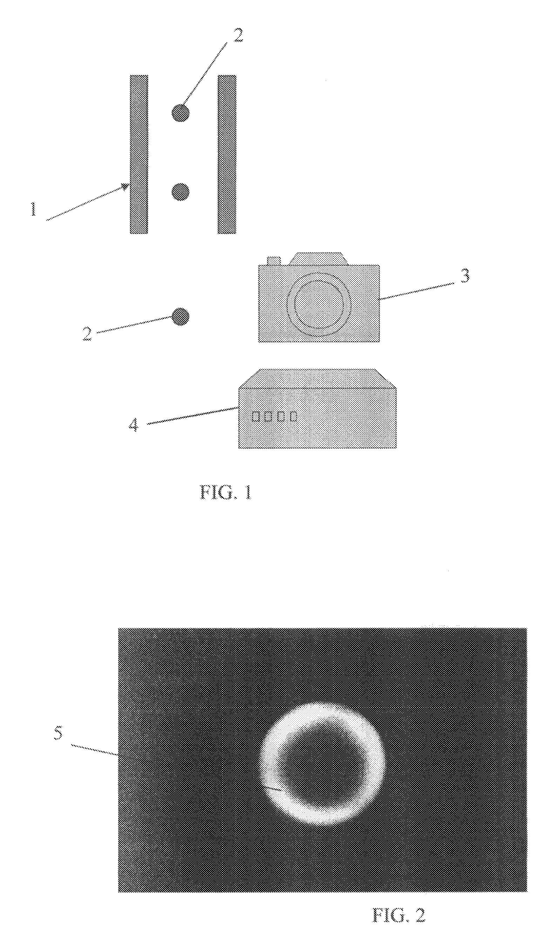

In Figure 1, the reference number 1 denotes an induction tunnel, which is traversed by containers 2, whereto a cap incorporating a foil was preventively applied. Inside the tunnel 1, the foil is heated, to cause it to be sealed to the mouth of the container. A portion of foil sealed to the mouth of a container has, at the exit from the tunnel 1, markedly higher temperature than the rest of the foil and the container. At the exit from the tunnel 1, each container 2 interacts with optical detection means 3, able to detect a temperature distribution of the foil. Said optical detection means 3 preferably, though not necessarily, comprise an infrared TV camera. Subsequently, each temperature distribution is analysed, to evaluate the seal of the corresponding container. Said temperature distribution analysis step is conducted automatically by means of a computer 4, through the comparison of a temperature distribution to be analysed with a reference temperature distribution, relating to a properly sealed container. Alternatively, said analysis step can be conducted visually by an operator.

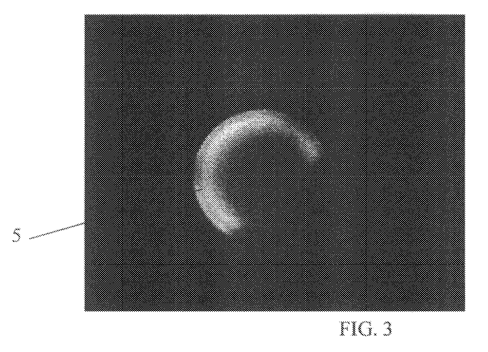

Examples of temperature distributions obtained through infrared photo cameras are shown in Figures 2 and 3. In the graphs of Figures 2 and 3, lighter colours denote higher temperature values. Said temperature distributions highlight with a lighter colour a hot area 5 of the foil, which substantially corresponds to the portion of the foil that is actually sealed to the mouth of the container. When the sealing operation occurs correctly, said hot area 5 exhibits a pattern shaped substantially as an annulus, without breaks, as shown in Figure 2. On the contrary, the fact that the hot area 5 of a foil exhibits a pattern other than a light-coloured annulus necessarily indicates that the seal of that foil is defective. For example, in the pattern of Figure 3 the hot area 5 exhibits, compared to the pattern of Figure 2 which is taken as a reference, a dark portion, corresponding to the foil portion that is not sealed properly.

Therefore, the method of the present invention originally allows to evaluate the seal of a container whereto is sealed a foil contained in a cap associated with the container itself, analysing a temperature distribution of the foil at the end of the sealing process. Said evaluation is effective even if the foil is included in the container, but sealed only partially, because it accidentally bent or moved during the sealing process. Moreover, the method described herein originally allows to determine the cause of any sealing defects, being based on a check of the sealed foil portion, evaluated in space. For example, when a foil does not attain a proper seal because it is bent, though it is aligned with the axis of the container mouth, the pattern of a temperature distribution of the foil exhibits a partial break; on the other hand, when a foil does not attain a proper seal because it is off-axis with respect to the mouth of the container, the pattern of the temperature distribution of the foil indicates a uniform temperature, but significantly lower than the one that denotes a proper seal.

## Claims

1. A method for evaluating the seal of a container closed with a foil applied with heat on the mouth of the container and then with a cap which contains the foil, **characterised in that** it comprises the following steps:
- determining a temperature distribution of the foil, at the end of the application of the foil on the container;
- analysing said temperature distribution.

2. A method as claimed in claim 1, wherein said temperature distribution is determined by heat-sensitive optical means.

3. A method as claimed in claim 2, wherein said heat-sensitive optical means comprises an infrared television camera.

4. A method as claimed in claim 1, wherein the temperature distribution analysis is aimed at evaluating the positioning of the foil relative to the container neck.

5. A method as claimed in claim 1, wherein the temperature distribution analysis comprises a step of comparing it with reference temperature values for the sealing process, in order to identify any regions in which said sealing did not take place.

6. A method as claimed in claim 5, comprising a further step of diagnosing the cause of any seal defect.
